# EUROPEAN PATENT APPLICATION

(11) **EP 4 715 321 A1**
(43) Date of publication of application: **25.03.2026**
(21) Application number: 25198639.4
(22) Date of filing: 28.08.2025
(51) Int. Cl.: G01B 11/22, B60C 11/24, G01M 17/02

(54) **WHEEL WELL LOCATED TIRE OBSERVING SENSOR SYSTEM AND METHOD FOR TIRE HEALTH AND SECURITY DETERMINATION**

(30) Priority: 20.09.2024 US 202463696967 P; 27.08.2025 US 202519311215
(71) Applicant: The Goodyear Tire & Rubber Company, Akron, OH 44316 (US)
(72) Inventor: GLICKSTEIN, Jarred, Akron, 44316 (US)
(74) Representative: Kutsch, Bernd

(57) **Abstract**

A system and a method for determining a tire health of a tire (106) is disclosed. The system comprises a tire observing sensor system (112) affixed to a wheel well (109) of a vehicle (103), the tire observing sensor system (112) comprising a sensor configured to perform measurements on an outer surface of a tire (106); a computing device (115) comprising a processor and a memory, the tire observing sensor system (112) being communicatively coupled to the computing device (115); and machine-readable instructions stored in the memory. The machine-readable instructions, when executed by the processor, cause the computing device (115) to at least: obtain sensor data from the tire observing sensor system (112); determine a tire health of a tire (106) based at least in part on the sensor data; and generate an alert in an instance in which the tire health is below a predefined threshold.

## Description

### BACKGROUND

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

Often it is desirable to collect electronic data about the conditions in and around the tire. Such data can be communicated to the various different electronic systems of the vehicle, such as vehicle stability and/or braking systems, in order to provide improved control of the vehicle as well as to monitor or track driving behavior.

### SUMMARY OF THE INVENTION

The invention relates to a system in accordance with claim 1 and to a method in accordance with claim 9.

Dependent claims refer to preferred embodiments of the invention.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1A is a drawing of a vehicle with one or more tires according to various embodiments of the present disclosure.
FIG. 1B is a drawing of a side view of a wheel well of a vehicle with a tire being installed within the wheel well including a tire observing sensor system according to various embodiments of the present disclosure.
FIG. 2 is an example networked environment of a vehicle according to various embodiments.
FIGS. 3A, 3B, 4A, 4B, 5A, and 5B illustrate examples of tire tread blocks (captured by visible light camera) and the corresponding depth maps associated with the tire tread elements measured according to various embodiments.
FIG. 6 is a flowchart illustrating one example of functionality implemented as portions of an application executed in a computing environment in the network environment of FIG. 2 according to various embodiments of the present disclosure.

### DEFINITIONS

"CAN bus" is an abbreviation for controller area network.

"Tread element" or "traction element" means a rib or a block element defined by a shape having adjacent grooves.

### DETAILED DESCRIPTION OF PREFERRED EMBODIMENTS OF THE INVENTION

Disclosed are various approaches for determining tire health (e.g., tread wear/depth) and security of a tire using a tire observing sensor system that is affixed to a wheel-well of a vehicle. In various examples, the tire observing sensor system is able to monitor tire health and security based on an external view of the tire. Traditionally, tire health and security sensors are installed inside the tire (tire mounted sensors, TMS) or embedded in the tire (tire integrated sensors, TIS). These sensors are limited in their ability to measure tire health at the tread surface such as tread depth and temperature, and must use indirect means to assess road surface conditions such as friction, road surface classification (*e.g*., wet/dry, ice/snow), chemical contaminants (*e.g.*, oil, *etc.*), and detect foreign materials such as nails, screws, or rocks in the tread block or surface of the tire. The tire observing sensor system of the present disclosure directly observes the tread surface in real time to directly assess tire tread block condition and detect road surface elements and foreign objects in and on the tire.

In the following discussion, a general description of the system and its components is provided, followed by a discussion of the operation of the same. Although the following discussion provides illustrative examples of the operation of various components of the present disclosure, the use of the following illustrative examples does not exclude other implementations that are consistent with the principals disclosed by the following illustrative examples.

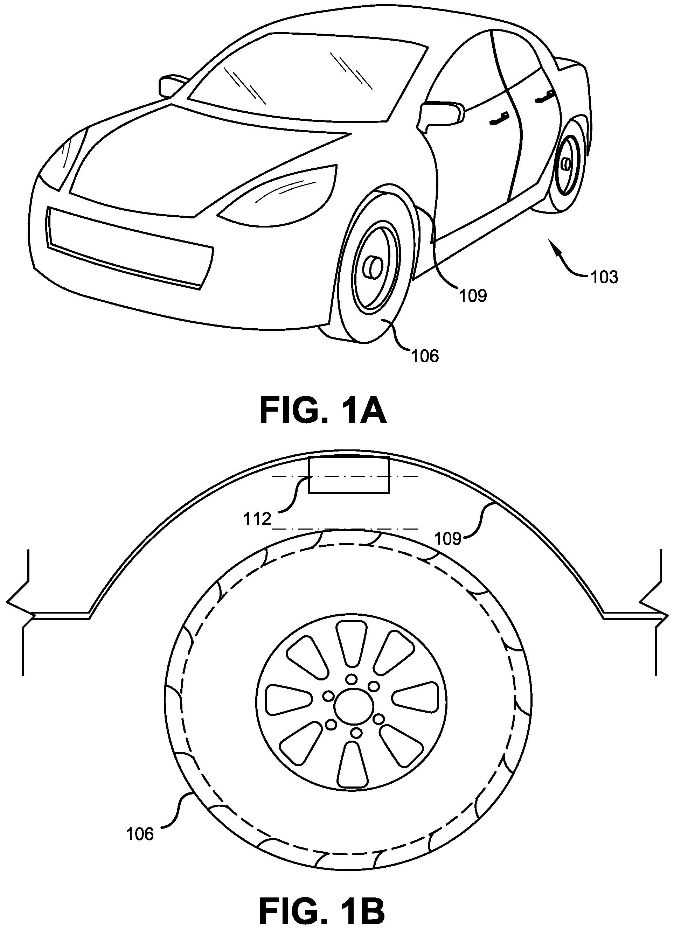

Turning now to FIG. 1A, shown is an example view of a vehicle 103 according to various embodiments. In particular, FIG. 1A illustrates an example perspective view of a vehicle 103 supported by a plurality of tires 106 that are each positioned within a wheel well 109 of the vehicle 103 according to various embodiments. While the vehicle 103 of FIG. 1A is depicted as a passenger car, the vehicle 103 may comprise any type of vehicle that employs tires where the passenger car is presented as an example. To this end, the vehicle 103 may comprise other vehicles falling into various categories such as commercial trucks and trailers, off-road vehicles and the like, in which such vehicles 103 include a greater or lesser number of tires 106 than are shown in FIG. 1A. The tires 106 are of conventional construction, and each tire 106 is mounted on a respective wheel as known to those skilled in the art. Each tire 106 includes a pair of sidewalls that extend to a circumferential tread. An inner liner is disposed on the inner surface of the tire 106, and when the tire is mounted on the wheel and within the wheel well 109, an internal cavity is formed, which is filled with a pressurized fluid, such as air.

Moving on to FIG. 1B, shown is a side view of the wheel well 109 of the vehicle 103 with a tire 106 being installed within the wheel well 109 of the vehicle 103. According to various examples, a tire observing sensor system 112 can be affixed within the wheel well 109 of the tire 106 for the purposes of assessing the tire health and security of the tire 106. The tire observing sensor system 112 can be affixed to the wheel well 109 via an adhesive and/or mechanical means. In various examples, the tire observing sensor system 112 is affixed within the wheel well 109 at a position along the center line of the tire 106 to allow for a full range of view of the tire 106 (*e.g*., tread element between the sidewalls of the tire 106) positioned relative to the tire observing sensor system 112. It should be noted that the positioning of the tire observing sensor system 112 is not limited to the top of the wheel arch of the wheel well 109, as shown in FIG. 1B, and can positioned anywhere along the wheel arch of the wheel well 109 so that the capturing range of the tire observing sensor system 112 is parallel to a tangent plane of the tire 106.

The tire observing sensor system 112 can comprise one or more types of sensors or sensing elements that can obtain data associated with the tire 106 positioned relative to the tire observing sensor system 112. In various examples, the tire observing sensor system 112 comprises a time of flight (TOF) image sensor which captures a three-dimensional (3D) array of pixels representing a depth map of the object (e.g., tire 106) under inspection in addition to a greyscale image. TOF image sensors project a modulated infrared light source at an object or scene of interest. The TOF image sensor then captures amplitude and phase difference of reflected light per pixel. The measured amplitude is used to construct a greyscale image and the phase difference is used to construct a depth map of the object under observation. In various example, the captured data from the TOF sensor can be analyzed to detect tread depth of the tread element of the tire 106 and determine the tire health of the tire 106.

In various examples, the tire observing sensor system 112 can further comprise additional sensors such as, for example, a visual light camera, an infrared light camera, an infrared light source, a visual light source, a tire surface temperature sensor, a global positioning system (GPS) location sensor and/or other types of sensors. In addition, the tire observing sensor system 112 can comprise a processor and a memory, a real time clock (RTC), any number of communication chips or interfaces (*e.g*., CAN bus, Wi-Fi, Bluetooth, *etc.*), and/or other components.

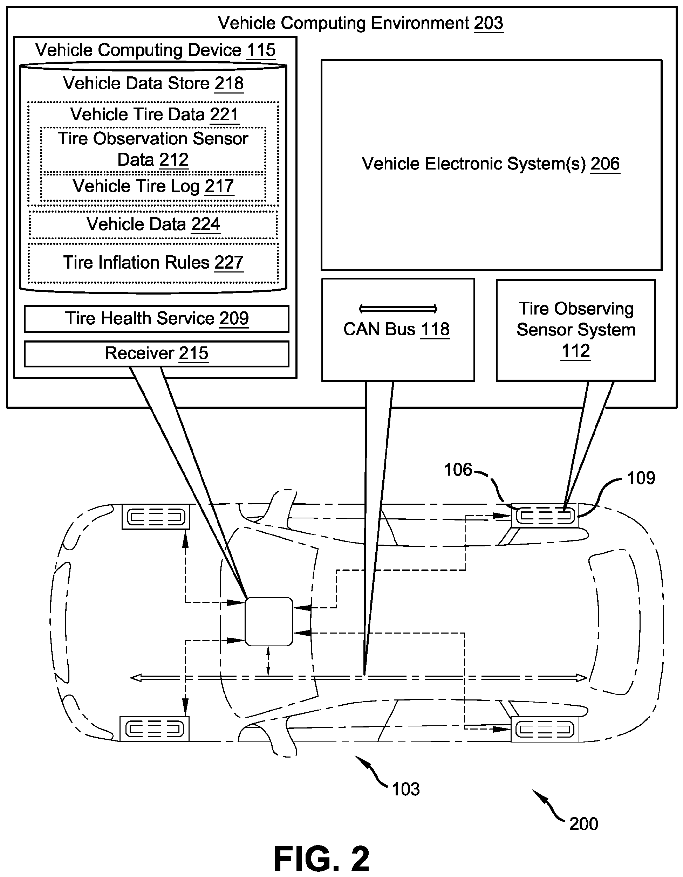

In various examples, the tire observing sensor system 112 can be directly wired to or can be in wireless communication with a vehicle computing device 115 (FIG. 2) of the vehicle 103, a Controller Area Network (CAN) bus 118 (FIG. 2) associated with the vehicle 103, and/or a remote computing device. In various examples, by having the tire observing sensor system 112 directly wired to the vehicle 103 (e.g., via the CAN bus 118, vehicle computing device 115), power constraints and bandwidth constraints for data communication can be minimized. Accordingly, as the tire observing sensor system 112 collects sensor data, the tire observing sensor system 112 can transmit the sensor data to the vehicle computing device 115, the CAN bus 118, a remote computing device, and/or another computing device or communication interface for analysis to determine tire health of the tire 106.

In various examples, sensor data collected from the tire observing sensor system 112 can be used to detect the tread wear of the tire 106, monitor tire alignment of the vehicle's suspension system, measure vehicle and/or trailer load, detect the removal and/or installation of a tire 106 from the vehicle 103, and/or other features associated with the tire 106. In various examples, the sensor data can be analyzed in real time to determine the wear of the tread element of the tire 106. For example, the real-time data can be compared with a history of collected data to detect wear in the tread element of the tire 106. In other examples, the sensor data can be analyzed to detect uneven tread wear which could be a sign of an alignment issues. In addition, the sensor data can include temperature of the tread block of the tire 106 which could affect friction and road contact parameters. For example, a sudden increase in temperature of the tread block can be a sign of rapid air loss of the tire 106. In other examples, the sensor data can be used to detect bearing issues in the wheel of the vehicle 103 by detecting irregular wear and hot spots in a thermal map that is included in the sensor data.

Load of the vehicle can be detected by measuring absolute distance between tire observing sensor system 112 and the tire 106 averaged over a period of time, using known information about the vehicle or trailer suspension. In addition, the removal and/or installation of a tire 106 can be monitored by an analysis of the sensor data. In various examples, the sensor data can be used to detect the removal and installation of a tire 106. When a tire 106 is removed from or installed on the vehicle, the sensor data can be used to detect the unauthorized removal and installation of the tire. For example, when analysis of the sensor data indicates a tire 106 with a tread element that has different tread wear or pattern than the tire 106 previously installed, this could be a sign of an unauthorized replacement of the tire 106 on vehicle 103. In another example, when a tire 106 is removed from the vehicle 103, the time and location of this occurrence can be logged by the tire observing sensor. This could be a sign of unauthorized replacement of the tire 106 or other unauthorized maintenance or modification of vehicle 103.

In various examples, the sensor data, results associated with an analysis of the sensor data, and/or a notification associated with the analysis can be transmitted back to a fleet manager device for observation, coordination, and/or appropriate action. Similarly, the sensor data, results associated with the analysis of the sensor data, and/or a notification associated with the analysis can be transmitted to user device for observation, coordination, and/or appropriate action.

Turning now to FIG. 2, shown is an example networked environment 200 according to various embodiments. FIG. 2 illustrates a networked environment 200 that includes a vehicle computing environment 203. The vehicle computing environment 203 can comprises a vehicle computing device 115, a CAN bus 118, one or more vehicle electronic systems 206, and the tire observing sensor system 109 which can be in data communication with each other via one or more network. The vehicle computing device 115 comprises a processor circuit that executes applications associated with the control and/or operation of the vehicle 103. For example, in FIG. 2, the processor circuit of the vehicle computing device 115 can execute a tire health service 209, and/or other applications.

The tire health service 209 can be executed to analyze tire observation sensor data 212 collected via the tire observing sensor system 112 in association with a given tire 106. The tire health service 209 can obtain the tire observation sensor data 212 from the tire observing sensor system 112 via the CAN bus 118 of the vehicle 103 or from an independent communication coupling between the tire observing sensor system 112 and the tire observing sensor system 112.

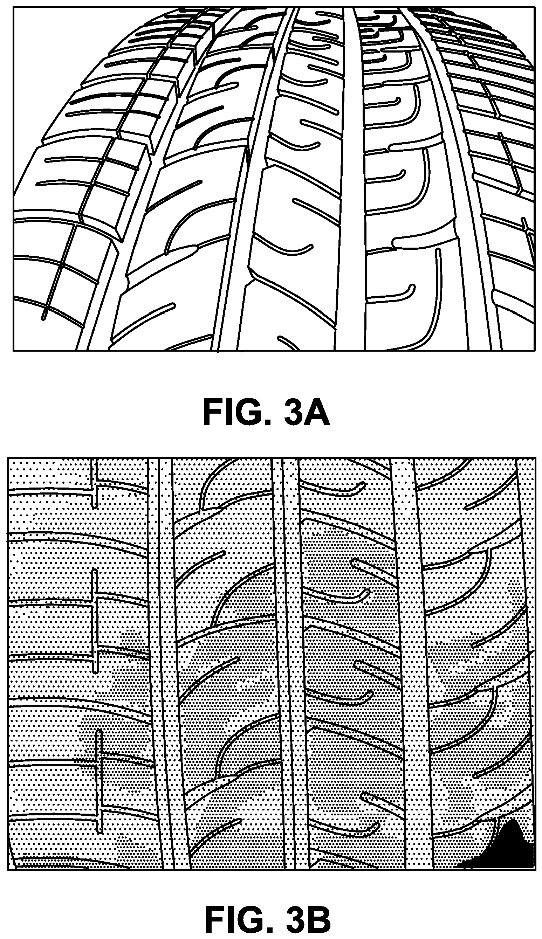

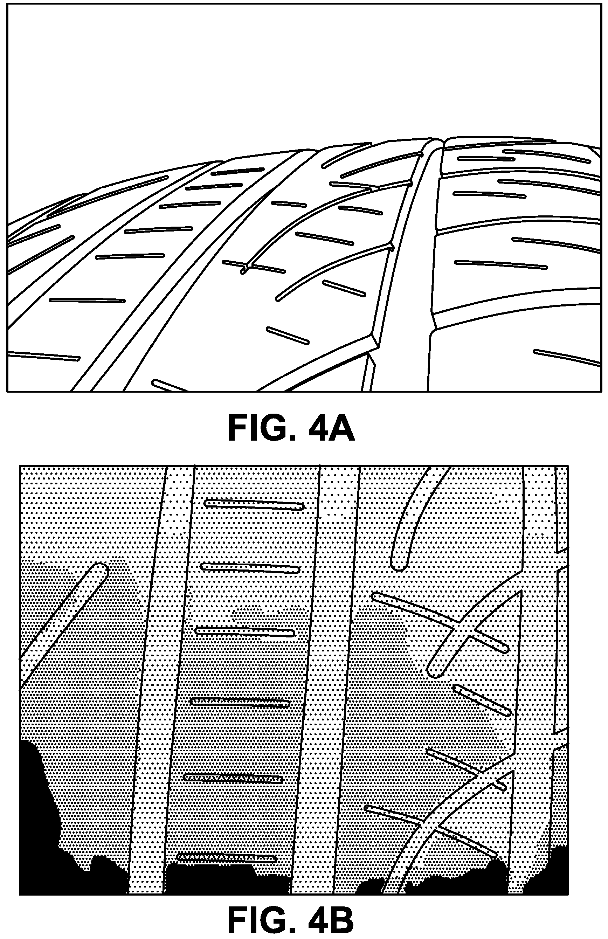

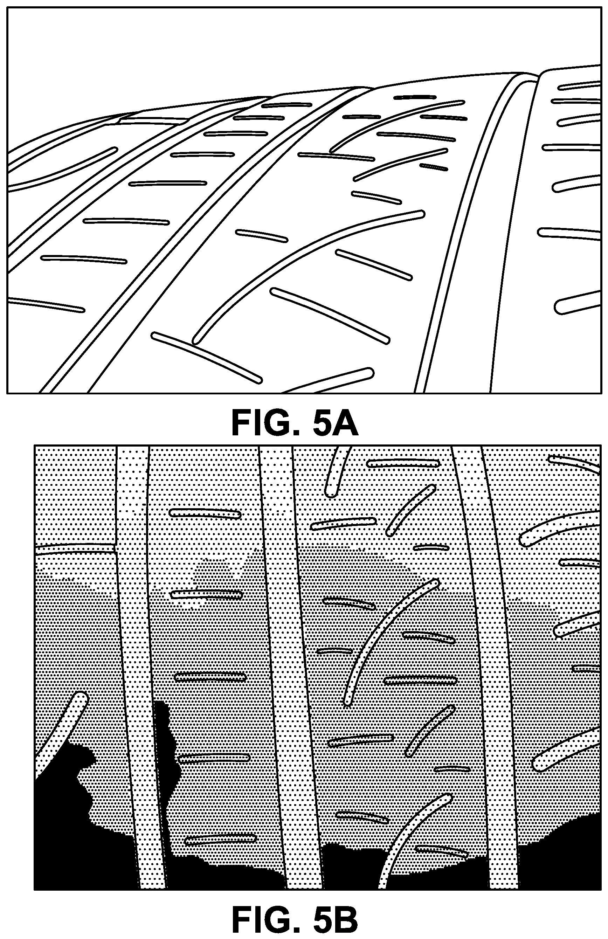

In various example, the tire observation sensor data 212 includes time of flight (TOF) data obtained from a time of flight imager. The time of flight data can include a three-dimensional (3D) array of pixels representing a depth map of the object (e.g., tire 106) under inspection. Accordingly, the 3D array of pixels can correspond to the tread with different colors of the pixels corresponding to the depth and distance. This data can be analyzed by the tire health service 209 to determine the wear of the tire tread elements. For example, FIGS. 3A-5B illustrate examples of a tire tread of a tire 106 and corresponding depth map associated with a tire tread element. In particular, FIG. 3A illustrates an almost new tire 106, and FIG. 3B illustrates the depth map obtained from a TOF imager of the tire 106 of FIG. 3A. FIG. 4A illustrates a partially worn tire 106 and FIG. 4B illustrates the depth map obtained from a TOF imager of the tire 106 of FIG. 4A. FIG. 5A illustrates a very worn tire 106, and FIG. 5B illustrates the depth map obtained from a TOF imager of the tire 106 of FIG. 5A.

Upon an analysis of the tire observation sensor data 212, the tire health service 209 can use the tire observation rules 227 to determine the wear of the tire tread element. If the wear is below a given threshold, the tire health service 209 can generate an alert notification which can then be transmitted to a remote computing device associated with a fleet manager, a user computing device associated with the user of the vehicle, and/or a vehicle display device of the vehicle 103 alerting of the tire health. The information can be used for observation, coordination, and/or appropriate action. The tire health service 109 is not limited to analyzing the tire observation sensor data 212 for tread wear. In addition, the tire observation sensor data 212 can be analyzed by the tire health service 109 to monitor alignment issues, temperature of the tire, removal and/or installation of a tire 106, and/or other information.

In various examples, the vehicle computing device 115 can also comprise a receiver 215 for obtaining tire observation sensor data 218 transmitted from the tire observation sensor system 112 within the wheel well 109 of the vehicle 103, tire observation sensor data 218 and other vehicle data obtained from the CAN bus 118 associated with the vehicle 103, and/or other data that is accessible over a network.

Also, various data is stored in a vehicle data store 218 that is accessible to the vehicle computing device 115. The data store 215 may be representative of a plurality of data stores 218 as can be appreciated. The data stored in the data store 218 for example, is associated with the operation of the various applications and/or functional entities associated with the vehicle 103. For example, the data store 218 can include vehicle tire data 221, vehicle data 224, tire observation rules 227, and/or other information.

The vehicle tire data 221 can include information for each specific tire 106. For example, the vehicle tire data 221 may include a tire identifier, manufacturing information for the tire 106 (*e.g.*, manufacture name, tire model, *etc.*), tire size information (*e.g.*, rim size, width, and outer diameter, *etc.*), manufacturing location, manufacturing date, a treadcap code that includes or correlates to a compound identification, a mold code that includes or correlates to a tread structure identification, and/or other information. The vehicle tire data 221 may also include a service history or other information to identify specific features and parameters of each tire 106. The vehicle tire data 221 can further include tire observation sensor data 212, the vehicle tire log 217 and/or other data.

The tire observation sensor data 212 can comprise data collected from a tire observation sensor system 112 on a given tire 106. As previously discussed, the tire observation sensor system 112 can comprise at least one of a time of flight imager, a visual light camera, an infrared light camera, an infrared light source, a visual light source, a tire surface temperature sensor, a global positioning system (GPS) location sensor and/or other types of sensors.

The vehicle data 224 can include data associated with a vehicle 103 supported by the tire 106. The vehicle data 224 can be obtained from a vehicle CAN bus 118 in communication with one or more vehicle systems 206 of a vehicle 103 supported by the tire 106. The vehicle data 224 can include an engine torque, an engine revolutions per minute (RPM), a vehicle speed, a wheel speed, a vehicle acceleration, a vehicle load, an odometer value, a brake cylinder pressure value, and/or other type of vehicle data.

The tire observation rules 227 include rules, models, and/or configuration data for the various algorithms or approaches employed by tire health service 209, and/or other application or device. For example, the tire observation rules 227 can include predefined threshold values associated with determining a tire health such as a tread wear threshold value. In addition, the tire observation rules 227 can include the various models, formulas, equations, and/or algorithms for determining vehicle load. For example, the tire observation rules 227 can include algorithms that can use vehicle data 224 (*e.g*., suspension information), the tire observation sensor data 212, and/or other data to measure absolute distance between the tire observation sensor system 109 and the tire 106 which can be used to determine load.

In various examples, the vehicle computing device 115 can include a communication system to facilitate communication with vehicle components of the vehicle 103 (*e.g*., obtaining the tire observation sensor data 221 and vehicle data 218, *etc.*), a remote computing environment over a network, a user (client) device, or other type of computing device. In such implementations, the vehicle computing device 115 may include appropriate communication capabilities to connect with the computing device over a cellular or Wi-Fi network. The vehicle computing device 115 may also include appropriate communication capabilities using Bluetooth^{®} link, microwave transmission, radio broadcast, or other wireless communication modalities.

Although illustrated in FIG. 2 as being separate from the vehicle electronic system(s) 206, in some examples, the vehicle computing device 115 may be integrated with other vehicle electronic system(s) 206 in the vehicle 103. In various examples, the vehicle computing device 115 can be coupled to the CAN bus 118 and may communicate with other vehicle electronic systems 206 included on the CAN bus 118.

In various examples, the vehicle electronic systems 206 can include electronic components of a vehicle 103 that are responsible for managing and regulating various operations of the vehicle 103. For example, the vehicle electronic system 206 can include an engine control system, a transmission control system, a brake system, a suspension system, a steering system, and/or other type of system of vehicle. The vehicle electronic system(s) 206 can coupled to a CAN bus 118 to allow communication among the different vehicle electronic systems 206 as can be appreciated. In various examples, a vehicle electronic system 206 can comprise a processor circuit for executing applications to adjust the operational aspects associated with the particular vehicle electronic system 206.

It should be noted that although FIG 2 illustrates the tire health service 209 as being part of the vehicle computing device 115, in some embodiments, the vehicle computing device 115 can be part of a remote computing environment and the functionality of the tire health service 209 can be employed within the remote computing environment.

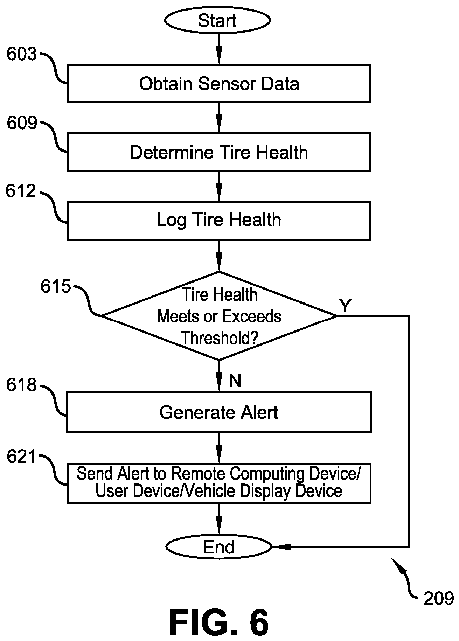

Next, a general description of the operation of the various components of the networked environment 200 is provided with reference to FIG. 6. FIG. 6 is a flowchart that provides one example of the operation of a portion of the tire health service 209. The flowchart of FIG. 6 provides merely an example of the many different types of functional arrangements that can be employed to implement the operation of the depicted portion of the tire health service 209. As an alternative, the flowchart of FIG. 6 can be viewed as depicting an example of elements of a method implemented within the networked environment 200.

Beginning with block 603, the tire health service 209 can obtain the tire observing sensor data 212. In various examples, the tire observing sensor data 212 can be obtained via a directly wired or wireless communication connection between the vehicle computing device 115 and the tire observing sensor system 115 of a given tire 106. In other examples, tire observing sensor data 212 is obtained via the CAN bus 118. The tire observing sensor data 212 can include a 3D depth map produced by time of flight imager, visual image captured by visible light camera (imager), IR image or pixel array, heat maps, temperature data, and/or other types of data that can be obtained via the one or more sensing elements included in the tire observing sensor system 115. In various examples, the tire health service 209 can obtain the tire observing sensor data 212 in real time, during the operation of the vehicle 103 where the vehicle 103 is moving, and/or while the vehicle 103 is not moving. In some examples, the tire observing sensor data 212 is obtained periodically, randomly, on demand, and/or according to a given schedule. It should be noted that the tire observing sensor data 212 can be obtained without manual intervention.

At block 606, the tire health service 209 can determine the tire health and/or security of a given tire 106 based at least in part on an analysis of the obtained tire observing sensor data 212. For example, the tire health service 209 can use the various rules, models, and/or algorithms in the tire observation rules 227 to determine tread wear, uneven tread wear, alignment issues, tire installation and/or removal, tire temperature, and/or other factors that can contribute to the health of the tire 106.

At block 609, the tire health service 209 can log the tire health of the tire 106 in a vehicle tire log 217. The tire health can be logged according to date and/or time of the analysis of the tire health. The tire health can include a tread depth, whether the tire 106 is present and/or missing, a tire temperature, tire load, and/or other type of information. The tire health can further include whether the tire health service 209 has detected potential alignment issues, tread wear issues, tire removal, tire temperature issues, and/or other type of issues that can be detected in response to the analysis of the tire observation sensor data 212. In some examples, the tire health service 209 can provide values to one or more tire health factors corresponding to the overall health of the tire 106. The tire health factors can include the tread depth, tread evenness, tire temperature, tire removal, and/or other tire factor. In various examples, the vehicle tire log 217 can be transmitted to a fleet manager device for observation, coordination, and/or appropriate action. Similarly, the vehicle tire log 217 can be transmitted to user device for observation, coordination, and/or appropriate action. In various examples, the vehicle tire log 217 is stored in the vehicle data store 218.

At block 612, the tire health service 209 can determine if the tire health meets or exceeds a predefined threshold. For example, if all of the calculated tire health factors meet or exceed a respective threshold value, this portion of the tire health service 209 proceeds to completion. Otherwise, if one or more of the tire health factor values falls below a given threshold, the tire health service 209 can proceed to block 618.

At block 618, the tire health service 209 generates an alert notification. The alert notification can indicate the tire health factor that has fallen below a given threshold. For example, if the tread depth is below a predefined threshold, the alert notification can indicate that the tread depth for the given tire 106 is below the desired depth. At block 621, the tire health service 209 can send the alert notification to a remote computing device, a user device, and/or a vehicle display device. For example, the alert notification can be transmitted to a fleet manager device for observation, coordination, and/or appropriate action. Similarly, the alert notification can be transmitted to user device for observation, coordination, and/or appropriate action. Further, the alert notification can be transmitted to the vehicle display device to indicate the tread health issue. Thereafter, this portion of the process proceeds to completion.

A number of software components previously discussed are stored in the memory of the respective computing devices and are executable by the processor of the respective computing devices. In this respect, the term "executable" means a program file that is in a form that can ultimately be run by the processor. Examples of executable programs can be a compiled program that can be translated into machine code in a format that can be loaded into a random-access portion of the memory and run by the processor, source code that can be expressed in proper format such as object code that is capable of being loaded into a random-access portion of the memory and executed by the processor, or source code that can be interpreted by another executable program to generate instructions in a random-access portion of the memory to be executed by the processor. The memory includes both volatile and nonvolatile memory and data storage components. Volatile components are those that do not retain data values upon loss of power. Nonvolatile components are those that retain data upon a loss of power.

Although the applications and systems described herein can be embodied in software or code executed by general purpose hardware as discussed above, as an alternative the same can also be embodied in dedicated hardware or a combination of software/general purpose hardware and dedicated hardware. If embodied in dedicated hardware, each can be implemented as a circuit or state machine that employs any one of or a combination of a number of technologies.

The flowchart shows the functionality and operation of an implementation of portions of the various embodiments of the present disclosure. If embodied in software, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as a processor in a computer system. The machine code can be converted from the source code through various processes. For example, the machine code can be generated from the source code with a compiler prior to execution of the corresponding application. As another example, the machine code can be generated from the source code concurrently with execution with an interpreter. Other approaches can also be used. If embodied in hardware, each block can represent a circuit or a number of interconnected circuits to implement the specified logical function or functions.

Although the flowchart shows a specific order of execution, it is understood that the order of execution can differ from that which is depicted. For example, the order of execution of two or more blocks can be scrambled relative to the order shown. Also, two or more blocks shown in succession can be executed concurrently or with partial concurrence. Further, in some embodiments, one or more of the blocks shown in the flowchart can be skipped or omitted. In addition, any number of counters, state variables, warning semaphores, or messages might be added to the logical flow described herein, for purposes of enhanced utility, accounting, performance measurement, or providing troubleshooting aids, *etc.* It is understood that all such variations are within the scope of the present disclosure.

Also, any logic or application described herein that includes software or code can be embodied in any non-transitory computer-readable medium for use by or in connection with an instruction execution system such as a processor in a computer system or other system. In this sense, the logic can include statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. Moreover, a collection of distributed computer-readable media located across a plurality of computing devices (*e.g*., storage area networks or distributed or clustered filesystems or databases) may also be collectively considered as a single non-transitory computer-readable medium. The computer-readable medium can include any one of many physical media such as magnetic, optical, or semiconductor media.

Further, any logic or application described herein can be implemented and structured in a variety of ways. For example, one or more applications described can be implemented as modules or components of a single application. Further, one or more applications described herein can be executed in shared or separate computing devices or a combination thereof. For example, a plurality of the applications described herein can execute in the same computing device, or in multiple computing devices in the vehicle computing environment 203.

## Claims

1. A system comprising:
a tire observing sensor system (112) affixed to a wheel well (109) of a vehicle (103), the tire observing sensor system (112) comprising a sensor configured to perform measurements on an outer surface of a tire (106);
a computing device (115) comprising a processor and a memory, the tire observing sensor system (112) being communicatively coupled to the computing device (115); and
machine-readable instructions stored in the memory that, when executed by the processor, cause the computing device (115) to at least: obtain sensor data from the tire observing sensor system (112); determine a tire health of a tire (106) based at least in part on the sensor data; and generate an alert in an instance in which the tire health is below a predefined threshold.

2. The system of claim 1, wherein the sensor and/or the tire observing sensor system (112) is affixed to the wheel well (109) of the vehicle (103) such that the sensor and/or the tire observing sensor system (112) is positioned parallel to a tangent plane of the tire (106) installed on the vehicle (103); and/or wherein the sensor and/or the tire observing sensor system (112) is positioned within the wheel well (109) relative to a center line of the tire (106).

3. The system of claim 1 or 2, wherein the sensor data comprises a three-dimensional array of pixels representing a depth map of a portion of a tire tread in an image capturing range of the tire observing sensor system (112).

4. The system of at least one of the previous claims, wherein the sensor comprises at least one of a time of flight sensor, a visual light sensor, a thermal sensor, an infrared temperature sensor, or a global positioning system location sensor.

5. The system of at least one of the previous claims, wherein the tire observing sensor system (112) is communicatively coupled to the computing device via a control area network (CAN) bus (118) of the vehicle (103); and/or wherein the tire observing sensor system (112) is wired to the CAN bus (118).

6. The system of at least one of the previous claims, wherein the sensor data corresponds to real-time data obtained during operation of the vehicle (103).

7. The system of at least one of the previous claims, wherein, when executed, the machine-readable instructions cause the computing device to at least log the tire health in a vehicle log (217) associated with the vehicle (103).

8. The system of at least one of the previous claims, wherein, when executed, the machine-readable instructions cause the computing device to at least: determine that the tire health fails to meet or exceed a predefined threshold, and send the alert to a fleet manager device or a user device.

9. A method comprising:
obtaining, via a vehicle computing device (115), sensor data from a tire observing sensor system (112) affixed to a wheel well (109) of a vehicle (103), the tire observing sensor system (112) comprising a sensor configured to perform measurements on an outer surface of a tire (106);
determining, via the vehicle computing device (115), a tire health of a tire (106) based at least in part on the sensor data; and
generating, via the vehicle computing device (115), an alert in an instance in which the tire health is below a predefined threshold.

10. The method of claim 9, wherein the sensor and/or the tire observing sensor system (112) is affixed to the wheel well (109) of the vehicle (103) such that the sensor and/or the tire observing sensor system (112) is positioned parallel to a tangent plane of the tire (106) installed on the vehicle (103); and/or wherein the sensor and/or the tire observing sensor system (112) is positioned within the wheel well (109) relative to a center line of the tire (106).

11. The method of claim 9 or 10, wherein the sensor data comprises a three-dimensional array of pixels representing a depth map of a portion of a tire tread in an image capturing range of the tire observing sensor system (112).

12. The method of at least one of the claims 9 to 11, wherein the sensor comprises at least one of a time of flight sensor, a visual light sensor, a thermal sensor, an infrared temperature sensor, or a global positioning system location sensor.

13. The method of at least one of the claims 9 to 12, wherein the tire observing sensor system (112) is communicatively coupled to the via the computing device (115) via a control area network (CAN) bus (118) of the vehicle (103); and/or wherein the tire observing sensor system (112) is wired to the CAN bus (118).

14. The method of at least one of the claims 9 to 13, wherein the sensor data corresponds to real-time data obtained during operation of the vehicle (103).

15. The method of at least one of the claims 9 to 14, further comprising:
(i) logging the tire health in a vehicle log (217) associated with the vehicle (103); and/or
(ii) determining that the tire health fails to meet or exceed a predefined threshold; and sending the alert to a fleet manager device or a user device.
